# EUROPEAN PATENT APPLICATION

(11) **EP 2 458 703 A2**
(43) Date of publication of application: **30.05.2012**
(21) Application number: 11190191.4
(22) Date of filing: 22.11.2011
(51) Int. Cl.: H02J 3/14

(54) **System and method for estimating demand response in electric power systems**

(30) Priority: 30.11.2010 US 957299
(71) Applicant: General Electric Company, Schenectady, NY 12345 (US)
(72) Inventor: Black, Jason Wayne, Niskayuna, NY 12309 (US); Tyagi, Rajesh, Niskayuna, NY 12309 (US); Massey, Jerry Steven, Niskayuna, NY 12309 (US); Williams, James Dickson, Delaware, OH 43015 (US)
(74) Representative: Williams, Andrew Richard

(57) **Abstract**

A system and method for use in a network of utility customers to estimate demand response for various utility DR programs. The system first aggregates the premises (104) into clusters based upon customer information for each of the premises (602,604,804). A response estimation function is developed for each of the clusters (606,706,808,906). The demand response event request is then processed according to the clusters and the response estimation functions.

## Description

### BACKGROUND

Demand response refers to mechanisms used to encourage/induce utility consumers to curtail or shift their individual demand in order to reduce aggregate utility demand during particular time periods. For example, electric utilities employ demand response programs to reduce peak demand for electricity. Demand response programs typically offer customers incentives for agreeing to reduce their demand during certain time periods. Many of these programs (e.g., critical peak pricing) stipulate that the utilities can invoke only a limited number of demand response/curtailment events over a given time period (e.g., 20 per year) and also limit the time duration (e.g., minutes, hours) for each particular event. Further, each demand response event typically includes all of the premises participating in the demand response program. Calling a demand response (DR) event for all premises is likely sufficient when a relatively small fraction of premises are participating. However, as the number of participants increases, utilities can achieve improved benefits by invoking DR events for groups or subsets of participants each time. This will enable the utilities to call events more often without exceeding the contract terms, and will avoid excessive load reductions and/or rebound peaks.

Given that DR programs typically limit the number of opportunities to reduce load, utilities would like to maximize the benefits for each opportunity / event. These benefits include reducing generation / procurement costs and outages.

For these and other reasons, there is a need for the present invention.

### BRIEF DESCRIPTION

The present invention resides in a method, a computer readable medium and a system for use in a network of utility premises to process demand response requests. The system and method aggregate the premises into clusters based upon customer information for each of the premises. A response estimation function is developed for each of the clusters, and the demand response event request is processed using the clusters based upon the response estimation function.

### BRIEF DESCRIPTION OF THE DRAWINGS

Embodiments of the present invention will now be described, by way of example, only, with reference to the accompanying drawings in which:
FIG. 1 illustrates a utility management system according to an embodiment of the invention;
FIG. 2 illustrates a utility management system according to another embodiment of the invention;
FIG. 3 illustrates a demand response module according to an exemplary embodiment;
FIG. 4 illustrates a chart of an exemplary premise response to a demand response event;
FIG. 5 illustrates an estimation method according to an exemplary embodiment;
FIG. 6 illustrates a flow diagram for a clustering method for processing a demand response event according to an exemplary embodiment of the invention;
FIG. 7 illustrates a flow diagram for the processing step illustrated in FIG. 6 according to an exemplary embodiment;
FIG. 8 illustrates a flow diagram of a non-limiting illustrative example of the clustering process shown in FIG. 7; and
FIG. 9 illustrates a flow diagram for the illustrative processing step shown in FIG. 8.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

### DETAILED DESCRIPTION

The embodiments described herein are directed to an energy management system and method that enable utilities to optimize the use of demand response or curtailment events during certain periods of time. While embodiments of the invention will be described in the context of energy or electric utilities and power grid operations, it will be appreciated by those skilled in the art that the system and method can be used for other purposes or utilities as well.

As used herein, the term "module" refers to software, hardware, or firmware, or any combination of these, or any system, process, or functionality that performs or facilitates the processes described herein.

Demand response programs such as critical peak pricing (CPP), Variable Peak Pricing (VPP), Direct Load Control (DLC), and other various incentive programs are examples of demand response programs with contractual specifications as to when, how often, and the duration that a utility can designate a demand response event for a participating premise. In order to maximize the benefits from DR programs, it is necessary to be able to accurately estimate the reductions and rebound in load for subsets of participating premises. Accurate estimation will enable utilities to more efficiently utilize available DR assets (i.e., by only calling upon the number of premises needed to achieve a specific load reduction) as well as ensuring that the rebound effect (load that is shifted to pre- or post- event time periods) is accounted for in the DR planning and dispatch process. Accurate estimation will also enable utilities (or other entities such as aggregators, retailers, or other load serving entities) to more aggressively offer DR capability into wholesale electricity markets.

For example, a contract may specify that the utility can invoke up to 15 events per year, where each event will occur between the hours of 12 pm and 6 pm with a maximum of 60 total hours per year. According to embodiments of the invention, the utility can choose to use 10 events of 6 hours each, or 15 events of 4 hours each, or any other such combination of events and hours to stay within the 15 events, 60 hour limitations for each premise.

In this example, assume that the utility has 100,000 customers participating in the demand response program. In addition, the utility can designate a subset of the participating customers to be included in each event. When the utility evaluates whether or not to invoke a DR event, and how many premises to include, a critical element is understanding the response (load changes) that each set of premises will provide if they are selected to participate in a DR event. Since there are only a limited number of events per year, and there is a high degree of variation in loads on shorter time scales (hours or less), it is very difficult to develop precise estimates of individual premise response to a DR event. By utilizing clusters developed based on grouping similar premise behavior, it is possible to increase sample sizes and produce more accurate response estimation algorithms.

Embodiments of the system and method operate by aggregating utility premises into clusters based upon some criteria. By way of non-limiting example, premises can be clustered based upon usage or consumption characteristics, where premises exhibiting similar usage characteristics are clustered into usage clusters based on a usage profile for each of the premises. The usage profile can be based on contract types, the types of appliances/loads at the premise site, typical load use or consumption, times of use, duration of use, geographical location, etc. In other non-limiting illustrative embodiments, premises can be clustered based on event response criteria where those customers exhibiting similar event response behavior are clustered into response clusters. Clustering of the premises can be based on any suitable criteria to accomplish the performance goals of the utility. Cluster size depends upon premise information, application and desired performance of the system.

In addition, various levels of clustering can be used to further improve the accuracy of response estimation. Expanding on the non-limiting example of clustering premises based on usage, each of the usage clusters can then be divided into demand response or response clusters based upon similar response profiles to demand response events. For example, some premises in the usage cluster may not participate in any demand response or incentive program. These premises in each usage cluster could be aggregated into a response cluster. Other premises in the usage cluster may have a high rate of response to demand response events, while others may have a low rate of response to demand response events. Premise responses to demand response events vary significantly. According to embodiments of the system and method, premises that have similar response profiles to demand response events can be grouped together into response clusters. Usage cluster size and response cluster size depend upon premise information, application, and desired performance, and can be set by the utility or service provider. By clustering the premises into usage clusters and response clusters in this non-limiting example, utilities can accurately assess or estimate the response (e.g., reduction in load as well as duration) to a demand response event, and therefore, optimize the response to a demand response event request. Once the response of the response clusters is estimated, premises in response clusters chosen to respond to the demand response event will be grouped into dispatch groups. The dispatch groups are then deployed to respond to the demand response event. This accurate estimation not only allows the utility to use a subset of premises per event, it can optimize the selection of premises to deploy based upon required shed and accurately estimated response to the shed.

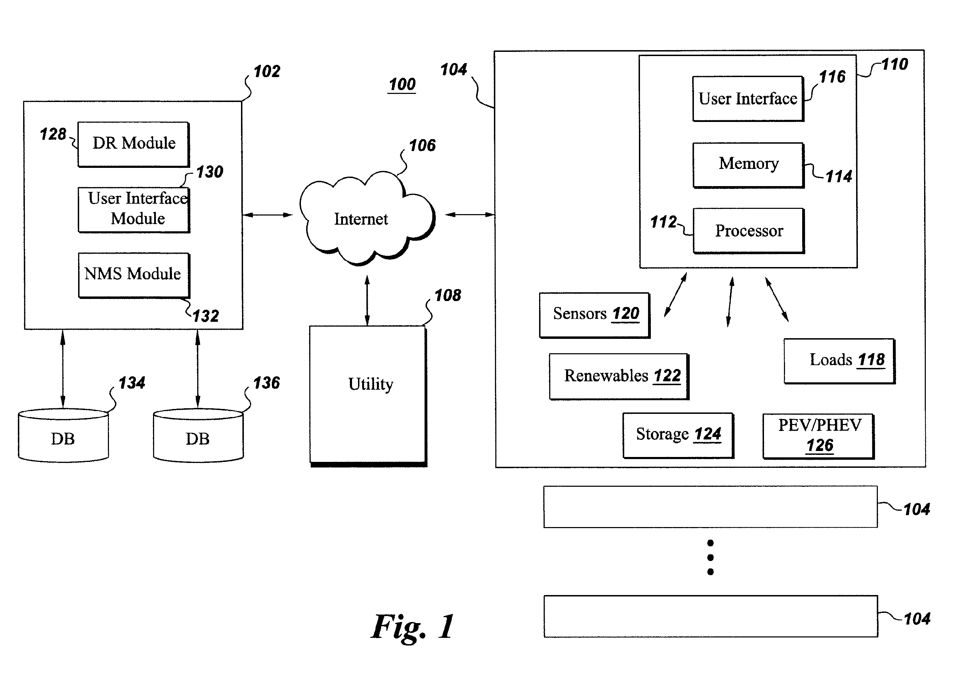

An exemplary energy management system according to an embodiment of the invention is shown in FIG. 1. The system 100 includes an energy management server 102, premise sites 104, and a utility 108. In order to facilitate the description of the embodiments of the invention, a single server 102 and a single utility source 108 are shown in FIG. 1. However, it should be understood that embodiments of the invention are not limited to these numbers, and that there can be any number of energy management servers, premise sites, service providers, and control centers in a utility network. In addition, the energy management server 102 can be arranged at and/or hosted by the utility 108 and/or by any other party.

Each premise site 104 includes an energy manager 110 having a processor 112, a memory 114, and a user interface 116. The user interface 116 can include a keyboard or touch screen, for example, along with a display. The processor 112 runs programs for monitoring and controlling the operation of various premise devices such as loads 118, sensors 120, renewables 122, storage 124, and plug in electric vehicles (PEV) or plug in hybrid electric vehicles (PHEV) 126. The sensors 120 include meters, thermostats, occupancy sensors, humidity gauges, and other such devices. The renewable resources 122 can include solar and/or wind power devices, for example. The processor 112 controls the various components using any of a number of interfaces or protocols including Zigbee, Z-Wave, WiFi, or Homeplug, for example. Communication between the premise sites 104, the server 102, and the utility 108 occurs via a WAN (e.g., Internet) 106, WiMAX, broadband, AMI, and/or power line carriers, for example. Communication can also occur via a private network. Any suitable means for communication can be used.

The energy management server 102 includes a Demand Response (DR) module 128, a Network Management Services (NMS) Module 130, a user interface module 132, a customer database (DB) 134, and a program database (DB) 136. The NMS module 130 provides communication management and provisioning for the DR module 128, the premises 104 and the utility 108. The customer database 134 stores premise profiles for the customers in the network. Each premise profile includes data such as historical data for each premise in the network and information on participation in any demand response program, for example. The historical data can include information on customer utility usage including load type, time of use (TOU), duration of use, shed or demand response events, for example. The premise usage information stored in the database 134 can be updated periodically (e.g., hourly, daily) with load data including hourly load and hourly price over a twenty four hour period, environmental data including weather information (e.g., temperature, humidity, wind speed, heating and cooling degrees, etc.) and date and time information such as day of the week, season, etc. In addition, the database 134 stores event data for each premise. More specifically, the database 134 stores historical information on whether a premise participated in a demand response event, the start time and end time, day of week, season, etc. In addition, the amount of load reduction and rebound are stored in database 134. Data related to response forecasting and expected future benefit calculations can also be stored in database 134. The program database 136 stores various applications and programs implemented by the energy management server 102. The user interface module 132 enables exchanging of information with an operator.

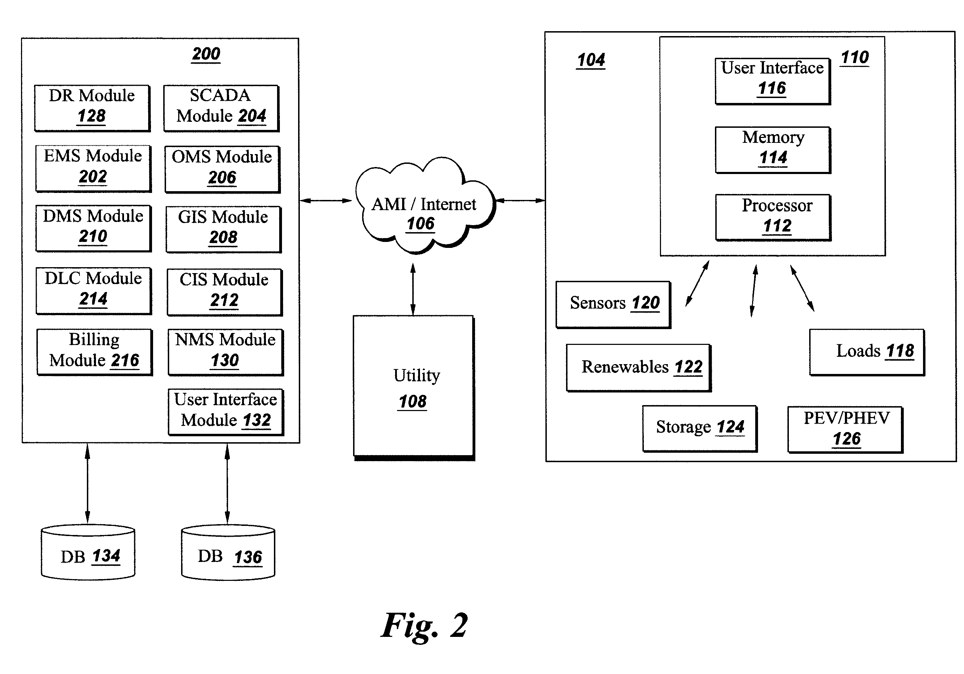

In an embodiment of the invention, the energy management server 102 can be arranged physically and/or logically at one or more utility control centers 200, as shown in FIG. 2. In addition, the utility control center 200 can include an energy management system (EMS) module 202 that performs load forecasting for the network, and monitors, controls, and optimizes the performance of the generation and transmission system. A Supervisory Control And Data Acquisition (SCADA) module 204 provides real time information at different points in the grid and also provides local controls. An Outage Management System (OMS) module 206 monitors load status information and outage restoration information for the customer sites 104 in the network. Some of the functions performed by the OMS module 206 include failure prediction, providing information on the extent of outages and impact to customers, and prioritizing restoration efforts. The OMS module 206 operates based on a detailed network model of the distribution system that is generated and maintained by a Geographic Information Systems (GIS) module 208. A Distribution Management System (DMS) module 210 provides real-time response to adverse or unstable network conditions by providing information on load status and load response. The DMS module 210 manages the response to alarms and/or events. Customer information including service contract information, participation in incentive and/or demand response programs, and contract price information, for example, is monitored and controlled by the Customer Information System (CIS) module 212. A Direct Load Control (DLC) module 214 controls and manages customer site devices such as the thermostat - HVAC, water heater, pool pump, washer, dryer, dishwasher, LCD / Plasma TV, plug loads (e.g., computers, computer peripherals / accessories, fax machine, power supplies), refrigerator, and lighting, for example. These are mostly discrete types of devices that have on/off, eco-mode/normal mode, or multiple discrete power saving modes (e.g., dimmable lighting). Customer billing is performed by the billing module 216.

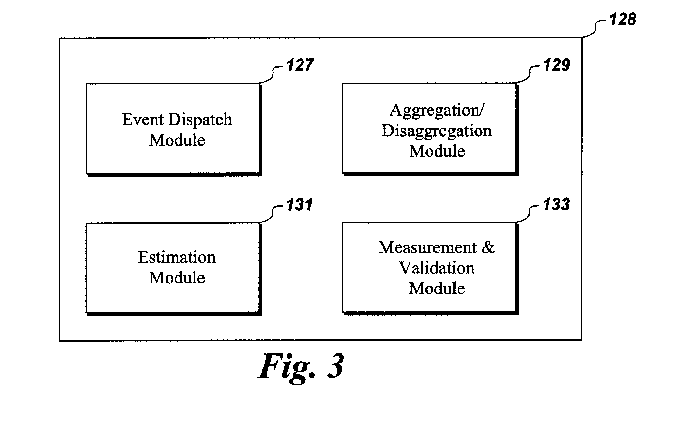

According to embodiments of the invention, the DR module 128 utilizes information from the premises 104, the utility 108 and the databases 134 and 136, to determine whether to call a demand response event, estimation of response to the demand response event by dispatch groups according to their associated usage and/or response clusters, which customers to include in the event and the time and duration of the event, for example. As shown in FIG. 3, the DR module 128 includes an event dispatch module 127 that performs the dispatch of premises to respond to a DR event request, an aggregation/disaggregation module 129 that performs the aggregation and disaggregation of premises into dispatch groups. In addition, the DR module 128 also includes an estimation module 131 that utilizes premises information to estimate the response of the premises in each cluster cluster. A measurement and validation module 133 measures and validates the response of the premises to a DR event. Other functions of the DR module 128 can include contingency response, and outage mitigation, for example.

Embodiments of the invention cluster premises according to particular criteria. To facilitate ease of description, a non-limiting example will be described with respect to usage clusters. Embodiments of the invention cluster premises according to usage behavior and response behavior to enable the utility to more accurately estimate the response to a demand response event. Response behavior for the premises in the network is developed based upon historical data. When a demand response program is first initiated or when there is no historical data, the response cluster is the same as the usage cluster. Once enough historical response data is accumulated, or if seed, simulation, or some other data are used as the historical data, then the usage cluster is divided into response clusters. Once the premises are aggregated into usage clusters and then divided into response clusters, a response forecaster is developed for each usage and response cluster. The response forecaster is then used to estimate response to a demand response event request for each premise in the corresponding usage or response cluster. Since all premises will initially be assigned to usage clusters (they will have no response data until they have actually participated in a DR event), the forecasting will be at the usage cluster level until such a time as sufficient data is captured to both form response clusters and to provide estimation at the response cluster level.

The methods for developing the response estimation algorithm can be applied at each level of clustering (usage or response). Response clustering is done for each demand response program. The same clustering can be used for each occurrence of a particular demand response program. For the following illustrative and non-limiting example, an empirical method for developing the response forecaster to be used in estimating demand response for a demand response event using clustering will be described. However, various estimation methods can be used including, but not limited to, regression techniques, Bayesian methods, and artificial intelligence including neural networks, genetic algorithms, and support vector machines (SVM).

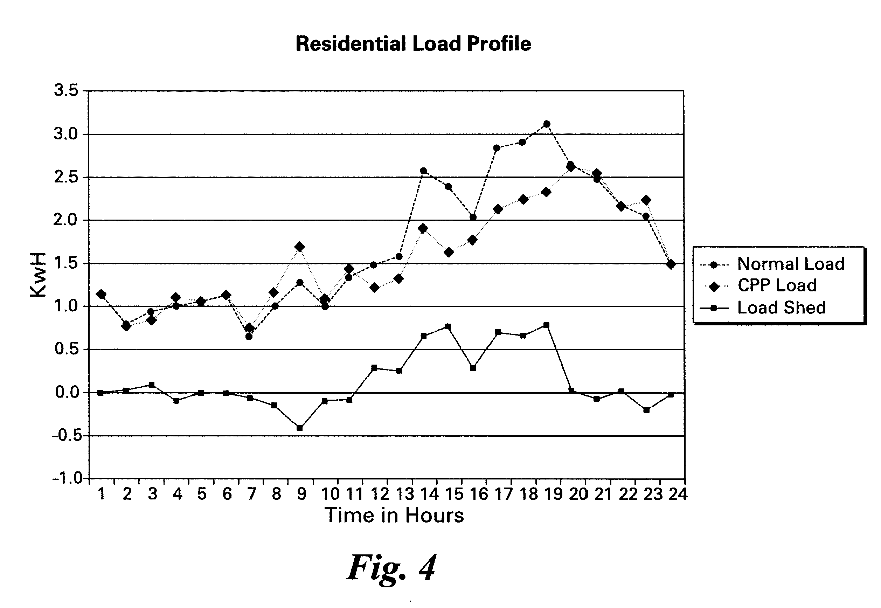

In the current example, within each of the response clusters, the difference between non-participating loads, where no demand response event is invoked and participating loads, where the event is invoked for each member of the cluster, will provide the actual load response values for that cluster over the period of time associated with the DR event. These response values will be used to develop a response estimate for the cluster. This estimate will then be applied to all premises in the particular cluster (with the potential to adjust the estimate based on real time information such as locally varying weather or meter/device status). The concept is illustrated in Figure 4. The dotted line represents the base, or normal load for the day. The dashed line depicts the load during the demand response event. Note the reduction during the demand response window and the pre-rebound and post-rebound immediately around the demand response window, representing typical customer tendency to move some energy consuming tasks to non-demand response periods. The difference between the base load and the demand response load, reflected by dot-dash line, represents the shed response of the premises.

In this non-limiting example, the normal load for a response cluster is forecasted by looking at historical load data and taking some simple or weighted average of the load for each premise in the response cluster from a number of days similar to the day for calling the current demand response event (i.e. season, day of week, time of day, etc.) when no demand response event was called and averaging these premise values to arrive at the estimated normal load for the response cluster. Similarly, to estimate the demand response load (i.e. load of the response cluster if the demand response event were to be called), a similar average of the load for each premise in the response cluster from a number of similar days when a demand response event was in fact called is determined and these premise values are averaged to arrive at the estimated demand response load for the response cluster. The difference between the estimated or forecasted normal load and the estimated demand response load for the response cluster results in the estimated shed response for the particular response cluster. In this example, the estimation is performed for all of the response clusters. However, any number of response clusters could be used. The number of similar days to use can be determined by the utility, or automatically determined for desired performance.

At the beginning of implementation of a demand response or incentive program or programs at the utility, there will be no historical data to estimate the demand response load. Various methods can be used to provide the necessary data until the program has been in place and historical data is generated including, but not limited to, using seed values, simulation data, or profile data from other utilities that serve similar demographics in similar geographical areas. As demand response events are called, actual data for the premises will be collected to the history and will eventually replace the initial profile data used from other utilities, or any seed or simulation data that may be used initially. In this non-limiting example, as mentioned above, the estimation will be done at the usage cluster level until sufficient data exists to divide the population into response clusters. The usage cluster will still be used to measure the actual response of each premise on DR event days by comparing participating to non-participating premise loads during the event days.

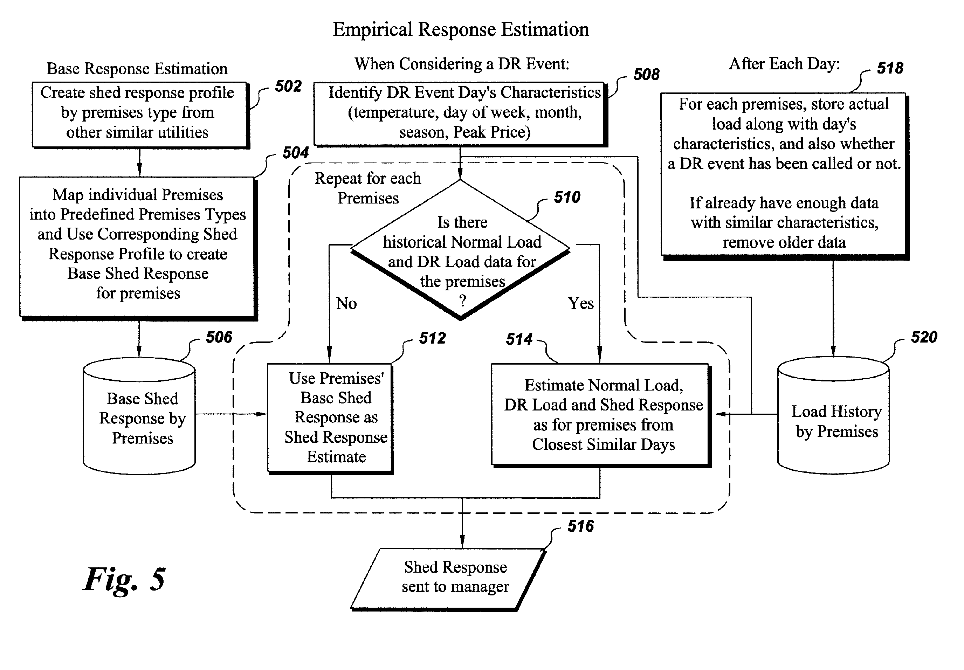

An illustrative example is shown in FIG. 5. In this non-limiting example, shed response profiles from other utilities could be created for a number of customer types, as shown in step 502. Then each premise participating in the demand response program at the target utility could be mapped into the appropriate profile and the shed response for that profile could be used to estimate the initial response, as shown in steps 504 and 506. In step 508, when a demand response event is called, the demand response event day's characteristics are identified including, but not limited to, temperature, day of the week, time of day, month, season, etc. In step 510, it is determined whether there is historical normal load data and demand response data for the customer premises in the event. If the answer is no, then processing continues to step 512 and the shed response stored in step 506 is used in step 516 to process the demand response event. If the answer is yes, then the normal load and the demand response load are estimated for similar days are estimated in step 514. The actual response of the customer sites or premises responding to the demand response event is stored in steps 518 and 520.

In some embodiments, sampling is used in order to improve the estimation and to minimize errors in the forecast. More particularly, a number of premises in the response cluster are used for real-time sampling. By way of non-limiting example, meters can be sampled for near real-time data. Sampling can be done periodically so that when a demand response event request is received, the estimation parameters are updated with near real-time data. The number of meters to sample can be determined by the utility, automatically, or by some other method. The sampling plan will be developed to ensure that sufficient meter data is obtained for each cluster of interest (usage or response). The meters of these premises are sampled to obtain near real-time data for the normal load for the cluster. The response estimate or the estimated shed response is then updated based on this near real-time data for the forecasted normal load. By way of non-limiting example, an average of the sampled meter readings can be used as the forecasted normal load. This sampling minimizes the forecast error, and therefore, improves the estimated shed response of the response cluster. The sampling can be done for one or more or all of the response clusters. The response clusters are then used to create dispatch groups to respond to the demand response event. Each dispatch group can include premises from different response clusters and different usage clusters. The size of the dispatch groups can be determined by the utility based on relevant criteria to the utility, for example, based on acceptable variance. The dispatch groups should be of a size to enable reasonably accurate assessment of reduction plus or minus some acceptable margin, i.e., acceptable variance. The acceptable variance can be based on a number of factors relevant to the utility such as cost, customers, etc. The dispatch groups can be the same or different sizes. The dispatch groups are then deployed to respond to the demand response event request.

After dispatch groups have responded to the demand response event request, the response is determined in order to update the response clusters and the response estimation function used for estimating the response of the response clusters. The actual response of the response clusters having premises in the dispatch groups can be determined using a variety of methods. An exemplary method is known as the baseline method. For each premise, data from the last number of days, for example, the last three days, is used to conclude what the load consumption will be for each premise in the response group during time of demand response event. For example, an average of the data for the last three days for each premise can be used as the load consumption. Then, measure the actual response of these premises in the response clusters and use the difference to determine the actual response of each response cluster.

In other embodiments, a control group can be used in order to reduce errors in determining the actual response of the response clusters to a demand response event. More particularly, the premises that are not participating in a demand response event can be used as a control group within each usage cluster to determine the response of the response clusters that were dispatched for the associated usage cluster. The response or behavior of the control group is determined by measuring the response of each premise in this group and averaging these values to arrive at the baseline or normal load for the usage cluster. The response of the dispatched/participating customers in each response cluster is determined by measuring the actual load of each participating premise in the response cluster and averaging these values to arrive at the response load for each response cluster dispatched. The actual usage of each response clusters in a usage cluster are compared with the actual usage of the control group or cluster to determine the response for the corresponding response cluster. This is done for all of the response clusters having premises dispatched in the dispatch groups. The response cluster information for each of these response clusters is then updated. In the case, the response cluster could be a single premise. This results in a measurement and verification of how much each premise reduced load in response to demand response event request.

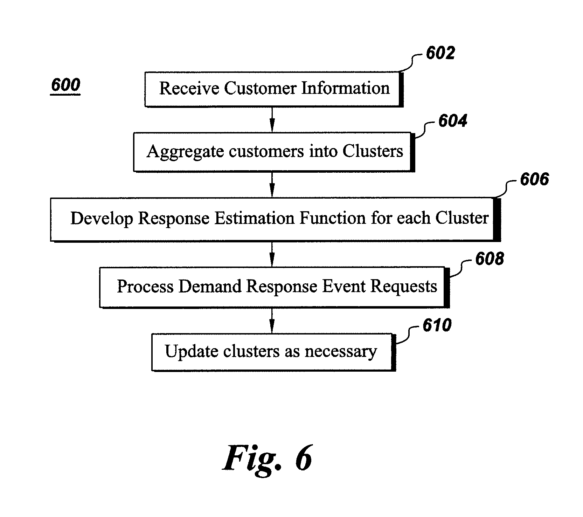

FIG. 6 shows a flow diagram for processing a demand response event request according to embodiments of the invention. The process 600 includes step 602, where the DR module 128 receives information from the customer premises 104, the utility 108, and information stored in the databases 134 and 136. In step 604, the DR module 128 utilizes this information to identify groups or aggregate premises into clusters. As previously noted, the clusters can be formed based on any suitable criteria that may be selected by the utility or selected automatically, for example. Some non-limiting examples include usage clusters, DR event response clusters, geographic clusters, DR program clusters, etc. The information for the clustering can include, by way of non-limiting example, the contract status, the types of loads at the site, load usage, times and duration of usage, and geographical information, for example. The number and size of the usage clusters can vary and be based upon application and desired performance, for example. In step 606, a response estimation function is developed for each of the clusters determined in step 604. The response estimation function can be any suitable function including, but not limited to, empirical methods, regression techniques, Bayesian methods, and artificial intelligence including neural networks, genetic algorithms, SVM, etc., for example. In the illustrative example described herein, an empirical method was used for the response estimation function and estimation process. In step 608, the demand response event request is processed based upon the clusters. The clusters are updated as necessary in step 610.

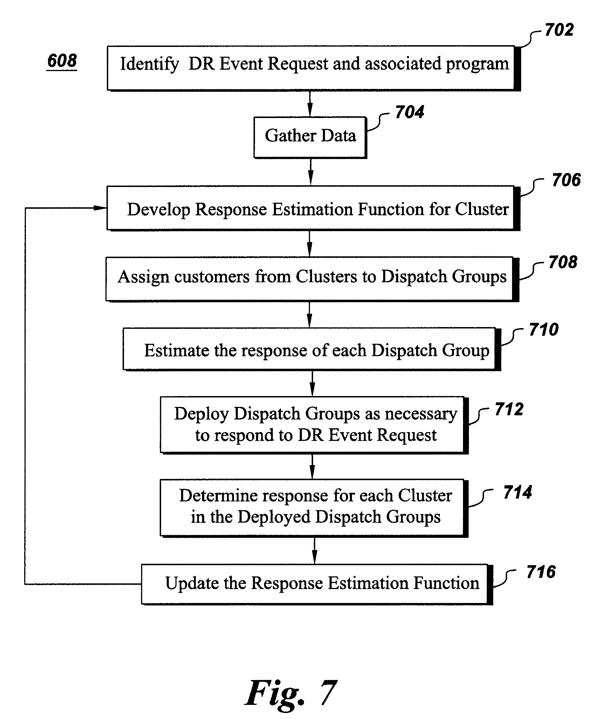

FIG. 7 illustrates a flow diagram for the processing step 608 shown in FIG. 6. In step 702, the demand response event request and associated DR program are identified. In step 704, the relevant data is gathered from the premises 104, the utility 108, and the information stored in the databases 134 and 136. In step 706, a response estimation function is developed for each of the clusters. The response estimation function can be any suitable function including, but not limited to, empirical methods, regression techniques, Bayesian methods, and artificial intelligence including neural networks, genetic algorithms, SVM, etc., for example. In step 708, premises from one or more of the clusters are assigned to dispatch groups. The dispatch groups represent the premises that can be deployed to respond to the particular demand response event request. The premises in the dispatch groups can belong to different clusters and premises from multiple clusters. For example, the premises in a dispatch group can be located at a particular node or segment of the utility distribution network so that deploying this group is most efficient. Any suitable method can be used to form the dispatch groups. The size of the dispatch groups can be selected to minimize variance, where larger dispatch groups will exhibit less variance. In step 710, the response of each of the dispatch groups is estimated using the response estimation function. In some embodiments, the estimation includes sampling a number of meters for each of the clusters responding to the demand response event in a dispatch group. The sampling will provide near real-time customer behavior for the forecasted normal load for the associated cluster. The sampling minimizes the forecast error in the estimation. In step 712, one or more dispatch groups are deployed to respond to the demand response event request depending upon the amount of response required to process the demand response event request. The response to the demand response event request is determined from event data available from the network. In step 714, the response of each cluster deployed in the dispatch groups is determined. As previously discussed, a control group can be used to more accurately determine the response of the clusters. The response estimation function is then updated in step 716.

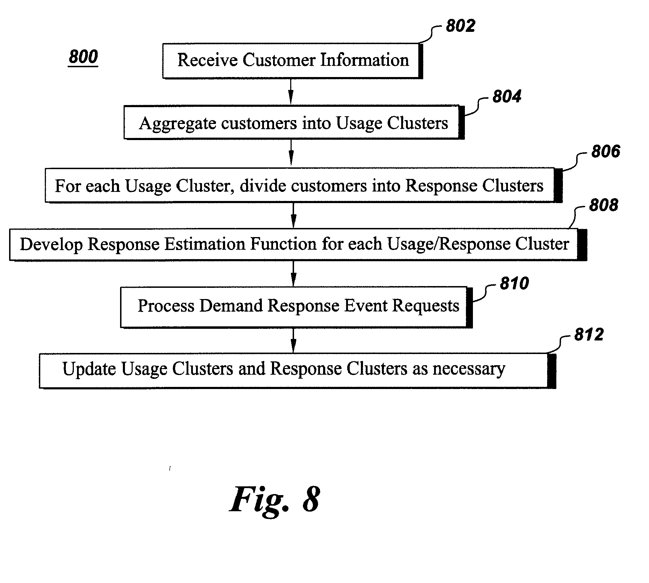

FIG. 8 shows a flow diagram for processing a demand response event request according to further embodiments. The process 800 includes step 802, where the DR module 128 receives information from the customer premises 104, the utility 108, and information stored in the databases 134 and 136. In step 804, the DR module 128 utilizes this information to identify groups or aggregate premises into usage clusters. The criteria for the usage clusters can include, by way of non-limiting example, the contract status, the types of loads at the site, load usage, times and duration of usage, and geographical information, for example. The number and size of the usage clusters can vary and be based upon application and desired performance, for example. In addition, in step 806, for each usage cluster, the DR module 128 divides the usage cluster into response clusters based upon similarity in responses to demand response event requests, as previously discussed. For example, some premises within the usage cluster may exhibit a high rate of response for at least some of the demand response program requests, while others may exhibit a low rate of response, while still others may not respond at all since they are not participating in any demand response or incentive based program. The premises with a high rate of response can be clustered together into a response cluster, and the same is true for the low response premises and no response premises. In some embodiments, the response clusters may be generated for each of the various demand response programs. In other embodiments, the response clusters may be the same for each of the various demand response programs. In step 808, a response estimation function is developed for each of the usage and response clusters. In step 810, the demand response event request is processed based upon the usage and response clusters. The usage clusters and/or the response clusters are updated as necessary in step 812.

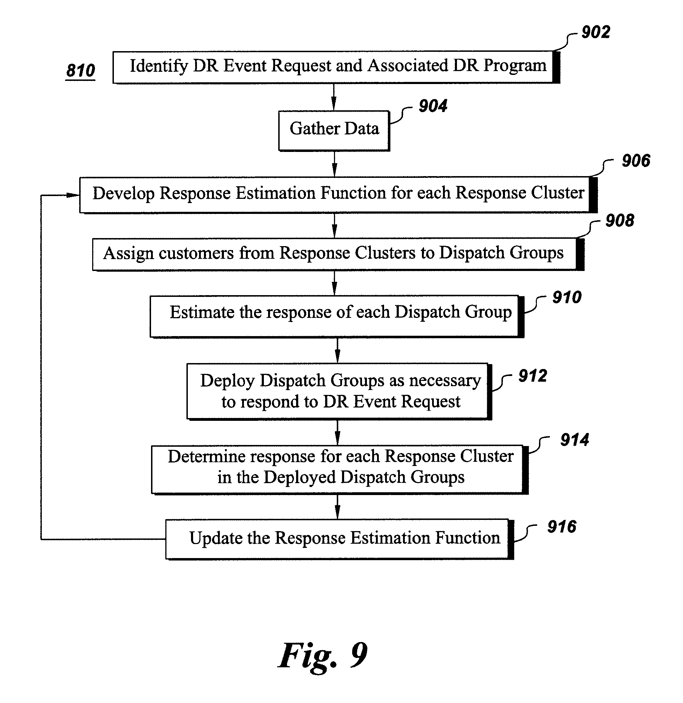

FIG. 9 is a flow diagram showing the processing of a demand response event requests 810 shown in FIG. 8 in more detail. In step 902, a demand response program for processing is identified. In step 904, the relevant data and customer data are gathered. This includes, but is not limited to, historical usage data, real time meter data, weather data, appliance data, demand bids, network status, and site energy management system data, for example. In step 906, a response estimation function is developed for each of the usage/response clusters determined in step 804, 806. If this is a new demand response program and there is no historical data, in some embodiments, the response cluster is the same as the usage cluster, while in other embodiments, seed data, simulation data or other initial data can be used to divide the usage cluster into response clusters, as previously described. The response estimation function can be any suitable function including, but not limited to, empirical methods, regression techniques, Bayesian methods, and artificial intelligence including neural networks, genetic algorithms, SVM, etc., for example. In the illustrative example described herein, an empirical method was used for the response estimation function and estimation process.

In step 908, premises from one or more of the response clusters (or from one or more of the usage clusters when the response clusters are the usage clusters) are assigned to dispatch groups. The dispatch groups represent the premises that can be deployed to respond to the particular demand response event request. The premises in the dispatch groups can belong to different response and usage clusters and premises from multiple response clusters from different usage clusters can also be part of the dispatch groups. For example, the premises in a dispatch group can be located at a particular node or segment of the utility distribution network so that deploying this group is most efficient. Any suitable method can be used to form the dispatch groups. The size of the dispatch groups can be selected to minimize variance, where larger dispatch groups will exhibit less variance.

In step 910, the response of each of the dispatch groups is estimated using the response estimation function. In some embodiments, the estimation includes sampling a number of meters for each of the response clusters responding to the demand response event in a dispatch group. The sampling will provide near real-time customer behavior for the forecasted normal load for the associated response cluster. The sampling minimizes the forecast error in the estimation. In step 912, one or more dispatch groups are deployed to respond to the demand response event request depending upon the amount of response required to process the demand response event request. The response to the demand response event request is determined from event data available from the network. In step 914, the response of each response cluster deployed in the dispatch groups is determined. As previously discussed, a control group can be used to more accurately determine the response of the response clusters. The response estimation function is then updated in step 916.

As described herein, the system and method embodiments of the invention enable utilities to accurately assess or estimate the number of premises required to respond to a demand response event by clustering the premises based on various desired criteria depending on performance and/or system requirements. For example, clusters can be developed based on event response behavior, usage behavior, geographical data, time of usage data, etc. Demand response requests can then be processed on the cluster level using response estimation functions developed for each cluster.

In some embodiments, the premises are clustered into usage clusters, and each usage cluster is divided premises into response clusters. The response cluster can be the same as the usage cluster when no historical data for premises is available, such as when new demand response programs are introduced. In other embodiments, seed data, simulation data or premise profile data from other utilities, or other initial data can be used to initially divide the usage clusters into response clusters. The response estimation is then performed on the clusters of premises exhibiting similar usage and response behavior, which results in more accurate response estimation. Since the response estimation is more accurate, the utility can more accurately determine which premises or resources to utilize to respond to a demand response event.

Although embodiments of the invention have been described with reference to processing of a single demand response program, the invention is not limited in this regard. The clustering according to embodiments of the present invention can be performed for multiple programs.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A method, comprising:
aggregating premises (104) in a network of utility premises into clusters based upon premise information for each of the premises (602,604,804);
developing a response estimation function for each of the clusters (606,706,808,906); and
processing a demand response event request based using the clusters based upon the response estimation function for each of the clusters (608,810).

2. The method of claim 1, wherein the response estimation function is developed from at least one of an empirical model, regression techniques, Bayesian techniques, and artificial intelligence (606,706,808,806).

3. The method of claim 1 or 2, further comprising:
updating the response estimation function (716,916); and
updating the clusters periodically (610,812).

4. The method of any of claims 1 to 3, wherein the premises information comprises at least one of demand response program parameters, event response information, load and demand characteristics of the premises, rebound parameters of the premises, and premise attributes including geographic location, power phase, types of appliances, and load shed windows.

5. The method of any preceding claim, wherein processing the demand response event request comprises:
estimating a response of each of the clusters to the demand response event request using the response estimation function (710,910); and
assigning the premises from one or more of the clusters into dispatch groups based upon the response of each of the clusters (708,908); and
dispatching the dispatch groups to respond to the demand response event request (712,912).

6. The method of claim 5, further comprising:
determining an event response of the premises in each of the clusters used to respond to the demand response event request (714,914); and
updating the response estimation function for each of the clusters used to process the demand response event request based on the event response (716,916).

7. The method of claim 5, wherein estimating the response (710,910) comprises:
sampling a subset of the premises in each of the clusters to determine substantially real-time usage information for each of the premises in the subset; and
assigning the substantially real-time usage information of the subset in each of the clusters to the entire corresponding cluster.

8. The method of claim 6, wherein determining the event response of the premises in each of the clusters used to respond to the demand response event request comprises:
comparing the event response of each of the premises in each of the clusters that responded to the demand response event request with premises in the cluster not participating in the demand response program; and
determining the event response of the premises in each of the clusters based upon a comparison result.

9. The method of any preceding claim, wherein aggregating premises into clusters (804) comprises:
aggregating the premises into response clusters based on event response information for each of the premises (908);
wherein the premise information for each of the premises comprises the event response information.

10. The method of any preceding claim, wherein aggregating premises into clusters comprises:
aggregating the premises into usage clusters (804) based upon the premise information for each of the premises.

11. The method of claim 10, further comprises:
dividing the premises in each of the usage clusters into response clusters based on event response information for each of the premises (806);
developing a response estimation function for each of the response clusters 808); and
wherein the premise information for each of the premises comprises the event response information.

12. The method of claim 11, wherein processing the demand response event request comprises:
estimating a response of each of the response clusters to the demand response event request using the response estimation function (706,906); and
assigning the premises from one or more of the response clusters for one or more of the usage clusters into dispatch groups based upon the response of each of the response clusters (708,908); and
dispatching the dispatch groups to respond to the demand response event request (712,912).

13. The method of claim 12, further comprising:
determining an event response of the premises in each of the response clusters associated with each of the usage clusters used to respond to the demand response event request (714,914); and
updating the response estimation function for each of the response clusters used to process the demand response event request based on the event response (716,916).

14. A computer-readable medium comprising computer-readable instructions of a computer program that, when executed by a processor, cause the processor to perform the method of any of claims 1 to 13.

15. A system for processing demand response events in a utility network, comprising:
premises connected to the utility network, wherein each of the premises comprises one or more utility consuming devices; and
a demand response module communicatively coupled to the premises and one or more utilities, wherein the demand response module is adapted to perform the steps of the method of any of claims 1 to 13.
